# EUROPÄISCHE PATENTSCHRIFT

(11) **EP 2 024 054 B1**
(45) Veröffentlichungstag und Bekanntmachung des Hinweises auf die Patenterteilung: **10.07.2013**
(21) Anmeldenummer: 07729257.1
(22) Anmeldetag: 18.05.2007
(51) Int. Cl.: B01D 46/24, B01D 46/00, B01D 46/52

(54) **FILTEREINHEIT**
FILTER UNIT
UNITÉ FILTRE

(30) Priorität: 29.05.2006 DE 102006025237
(43) Veröffentlichungstag der Anmeldung: 18.02.2009
(73) Patentinhaber: Mann + Hummel GmbH, 71638 Ludwigsburg (DE)
(72) Erfinder: BLOSSEY, Werner, 71726 Benningen (DE); EILERT, Lorenz, 38104 Braunschweig (DE)
(74) Vertreter: Seyboth, Matthias
(86) Internationale Anmeldenummer: PCT/EP2007/054809
(87) Internationale Veröffentlichungsnummer: WO 2007/137949

(56) Entgegenhaltungen:
- EP-A1- 0 391 019
- WO-A-2005/046841
- WO-A-2005/079954
- WO-A-2006/009766
- US-A1- 2004 020 177
- US-A1- 2004 173 097

## Beschreibung

Die Erfindung betrifft eine Filtereinheit, die wenigstens ein Gehäuse und wenigstens ein zwischen seinen Stirnflächen axial durchströmbares Filterelement umfasst, das über wenigstens einen Teil seiner Länge in ein rohrförmiges Filterschutzelement eingesetzt und damit verbunden ist und das an seinem Außenumfang wenigstens einen endlosen Dichtkragen aufweist, welcher am Filterschutzelement abgestützt ist und über Spannmittel gegen einen Dichtflansch am Gehäuse anpressbar ist.

Der WO2005/079954 A1 ist eine Luftreinigeranordnung zu entnehmen mit einem wechselbaren Filtereinsatz und einer Anordnung zum Positionieren und Befestigen des Filtereinsatzes in einer definierten Orientierung.

Die WO 2006/009766 A zeigt eine Luftfilteranordnung mit einem Filtereinsatz mit einer axialen Schwenkanordnung zum Schwenken des Filtereinsatzes in die Einbaulage im Gehäuse beim Einsetzen des Filtereinsatzes.

Aus der DE 32 49 151 C2 ist ein Kompaktluftfilterelement bekannt. Dieses besteht aus einem gewellten und einem glatten Filterpapier. Die Filterpapiere sind miteinander verklebt und dann miteinander zu einem Filterelement der gewünschten Größe aufgewickelt. Dabei erfolgt die Verklebung durch streifenförmigen Auftrag im Kantenbereich derart, dass die Zwischenräume zwischen der gewellten und der glatten Lage abwechselnd an den beiden Stirnseiten verschlossen sind, so dass keine direkte Strömung durch die zwischen den Filterpapieren gebildeten Kanäle möglich ist. Eine Luftströmung gelangt von der Rohluft- zur Reinluftseite zunächst nur in einen Stichkanal hinein, dann durch das Filterpapier hindurch und aus einem Stichkanal auf der anderen Seite wieder heraus erfolgen. Gegenüber herkömmlichen Faltenfiltern haben diese Kompaktluftfilter den Vorteil, bei gleicher Baugröße eine größere Filterfläche zu bieten bzw. bei gleicher Filterfläche eine kleinere Baugröße zu ermöglichen. Der aufgewickelte Filterkern ist so ausgebildet, dass eine Luftströmung nur durch das Filterpapier hindurch möglich ist.

Bei solchen und anderen Kompaktluftfilterelementen erfolgt die Strömung axial von einer Stirnseite zur anderen. Für die einwandfreie Funktion ist wesentlich, dass das Kompaktluftfilterelement an seinem Außenumfang gegenüber dem Luftfiltergehäuse hermetisch abgedichtet ist. Hierzu ist ein Dichtungskragen umlaufend angeformt, der an eine entsprechende Anlageschulter im Luftfiltergehäuse anzulegen und dann daran anzupressen ist.

Bekannt ist es zudem, das Kompaktluftfilterelement in ein Filterschutzelement einzuschieben, welches einen Kragen besitzt, der auf die umlaufend angeformte Dichtung drücken kann. Durch Umlegen eines Hebels wird das Filterschutzelement gegenüber dem Luftfiltergehäuse axial verschoben und an den Dichtungsring angelegt. Hierdurch ist das Einsetzen und Abdichten des Kompaktluftfilterelements in sehr einfacher Weise möglich. Wird allerdings das Umlegen des Hebels vergessen, so ist der Filter gänzlich ohne Funktion, da ungefilterte Luft am Dichtkragen und damit am Außenumfang des Kompaktluftfilterelements vorbeiströmen kann.

Aufgabe der Erfindung ist es daher, eine Abdichtung des Filterelements gegenüber dem Gehäuse zu erzwingen.

Diese Aufgabe wird durch eine Luftfiltereinheit mit den Merkmalen des Anspruchs 1 oder, in kinematisch umgekehrter Anordnung, mit den Merkmalen des Anspruchs 2 gelöst.

Durch die Kulissenführung wird das Filterschutzelement mit dem darin befindlichen Filterelement beim Einsetzen in das Gehäuse durch eine Bewegung, die quer zur Strömungsrichtung verläuft, zugleich axial in Bezug auf die Mittelachse des Filterelements vorgeschoben und mit seinem Dichtring gegen einen entsprechenden Flansch am Gehäuse gedrückt, wodurch die Abdichtung zwangsweise hergestellt wird. Ist das Filterelement mit dem aufgesetzten Filterschutzelement erst einmal in die entsprechende Kulissenführung am Gehäuse eingeführt, so wird auch die genaue Positionierung und Abdichtung des Filterelements in definierter Weise bewirkt. Gleiches gilt in umgekehrter Weise für die zweite Ausführungsform nach Anspruch 2.

Erfindungswesentlich ist, dass Filterschutzelement und Gehäuse beim Einsetzvorgang eine axiale Relativbewegung ausführen. Hierzu sind verschiedene formschlüssige Kopplungen wie auch z.B. nutenförmige Kulissenführungen und darin eingreifende Stifte denkbar.

Vorzugsweise ist die Kulissenführung durch eine Einführrampe und das Führungsmittel am Filterschutzelement als Vorsprung mit einer abgerundeten Gleitfläche ausgebildet. Eine solche Paarung ist leicht herzustellen und leicht montierbar. Außerdem kann sie sehr robust ausgebildet werden.

Ein Bedienerfehler könnte nur noch insofern auftreten, als dass das Filterelement nicht weit genug in seine Führung hinein geschoben würde. Um auch hier letzte Fehlerquellen ausschließen zu können, sind vorzugsweise Abstandhalterelemente an den Außenumfang des Filterschutzelements und/oder an die dem Filterschutzelement gegenüberliegenden Bereiche an der Unterseite des Deckelelements angeformt, um einen evtl. Luftspalt zwischen Filterschutzelement und Deckelelement vollständig zu überbrücken. Dies führt entweder dazu, dass bei unzureichender Einführung des Filterelements das Gehäuse gar nicht mit dem Deckelelement zu verschließen ist und so dem Bediener der Fehler signalisiert wird, oder dass das Filterelement mit dem Aufsetzen des Deckelelements von selbst in die vorgesehene, abdichtende Endlage gebracht wird.

Alternativ können die Deckel und Filterschutzelement auch so aufeinander abgestimmt sein, dass bei sachgemäß montiertem Filterelement kein Luftspalt mehr besteht, sie sich also berühren. Wird dann das Luftfilterelement in seinem Filterschutzelement nicht weit genug in die Führung hineingedrückt, lässt sich das Deckelelement ebenfalls nicht schließen bzw. es bewirkt selbst das Einschieben in die Endlage.

Im einfachsten Fall ist die Kulissenführung als schiefe Ebene ausgebildet. Die Abgleitfläche, die am Außenumfang des Filterschutzelements angeformt ist, gleitet auf der schiefen Ebene ab, bis die gewünschte Endposition erreicht ist. Die Fixierung der Endposition erfolgt dann formschlüssig über den Gehäusedeckel.

Vorzugsweise ist die Kulissenführung in wenigstens zwei Bahnbereiche mit unterschiedlicher Steigung bzw. Krümmung unterteilt. Ein erster Bahnabschnitt dient der Vorpositionierung des Filterschutzelements mit dem Filter innerhalb des Gehäuseunterteils und bewirkt den axialen Vorschub. In einem zweiten Bahnbereich ist eine optimale Anlage der Gleitflächen des Filterschutzelements an den entsprechenden Aufnahmen in der Kulissenführung des Gehäuses gegeben.

Ist beispielsweise die Gleitfläche als Kreisbogen ausgebildet, dann ist im Bereich der Kulissenführung ein dazu kompatibler Kreisbogenabschnitt vorgesehen.

Zwischen den beiden Bahnbereichen liegt vorzugsweise ein Sattel, der insbesondere mit einem leichten Hinterschnitt ausgebildet sein kann, so dass beim Hereindrücken des Filterelements nach Überwinden des Sattels eine Verrastung bewirkt wird, durch die das Filterelement zumindest während der Montage sicher in der vorgesehenen Gebrauchslage gehalten wird, bis eine endgültige Fixierung über das Deckelelement erfolgen kann.

Das Filterschutzelement besitzt vorzugsweise eine solche Länge, dass es sich zumindest von einer Vorderseite, an der Stützelemente für den außenumfänglich am Filterelement angebrachten Dichtkragen angeordnet sind, bis zu den Spannmitteln erstreckt. Dadurch kann die von den Spannmitteln bewirkte axiale Vorschubkraft über die Wandung des Filterschutzelements geleitet werden, ohne stauchend auf das Filterelement selbst zu wirken.

Die Spannmittel werden dabei vorzugsweise in dem vom Dichtkragen abgewandten Endbereich angeordnet und das Filterschutzelement wird so lang ausgebildet, dass es das Filterelement vollständig aufnehmen kann. Somit sind im Bereich des Dichtkragens und bei den Spannmitteln zwei Auflager gebildet, auf denen das Filterschutzelement samt Filter beiden Endes fest gelagert ist. Frei kragende Bereiche sind allenfalls sehr kurz, so dass bei dieser bevorzugten Ausbildung einer Filtereinheit auch die Biegemomentenbelastung entsprechend gering ist.

Anwendung findet die erfindungsgemäße Filtereinheit insbesondere als Luftfiltereinheit für Brennkraftmaschinen. Als Filter werden vorzugsweise Kompaktluftfilter der zu Beginn beschriebenen Art eingesetzt.

Die Erfindung wird nachfolgend mit Bezug auf die Zeichnung näher erläutert. Die Figuren zeigen im Einzelnen:
- Fig. 1: einen Blick von oben in eine geöffnete Luftfiltereinheit und
- Fig. 2: das Detail X aus Fig. 1 in seitlicher Ansicht.

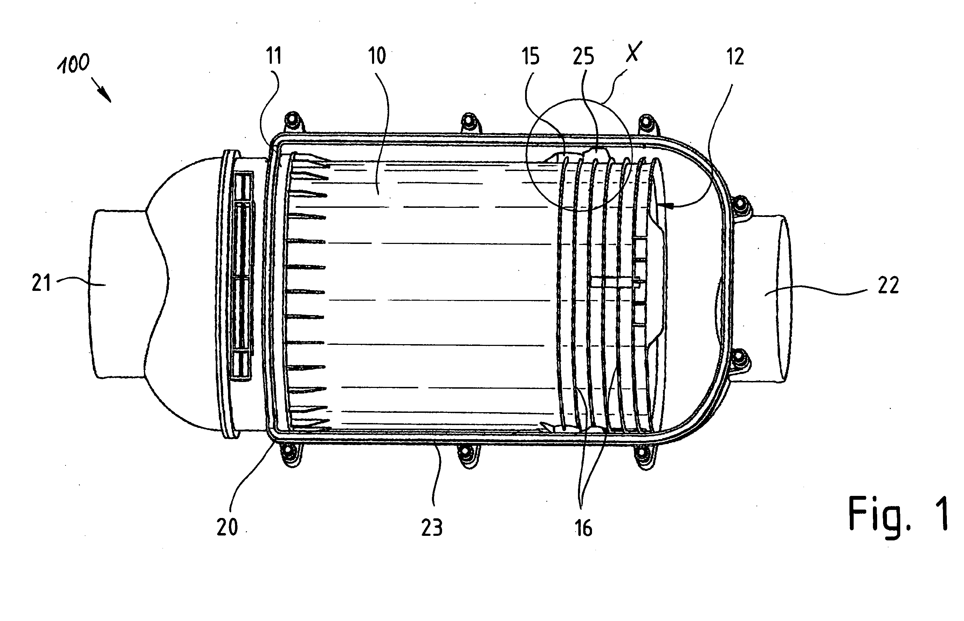

Figur 1 zeigt eine Luftfiltereinheit 100 mit einem Gehäuse 20 und einem darin positionierten rohrförmigen Filterschutzelement 10.

In Fig. 1 ist der Deckel des Gehäuses 20 entfernt, so dass ein Blick in das Gehäuse möglich ist. Das Filterelement selbst ist vollständig innerhalb des Filterschutzelements 10 angeordnet und daher in Fig. 1 nicht erkennbar.

Das Filterschutzelement 10 weist eine vordere Muffe 11 auf, die zur Aufnahme eines Dichtkragens bestimmt ist, welcher am Umfang des Filterelements angeformt ist. Die Muffe 11 bildet eine Abstützung für den Dichtkragen, so dass bei einem axialen Vorschub des Filterschutzelements 10 mit dem darin eingesetzten Filterelement der Dichtkragen an einen entsprechenden flanschartigen Absatz am Gehäuse 20 bewirkt wird. Von dort verjüngt sich das Gehäuse bis zu einem Anschlussstutzen 21.

Auch an einem gegenüberliegenden Ende liegt das Filterschutzelement 10 mit einer Stirnseite 12 vor einem Anschlussstutzen 22.

Erfindungswesentlich ist die Anordnung eines Vorsprungs 15 am Außenumfang des Filterschutzelements 10, welcher im Eingriff mit einer Einführrampe 25 steht, welche an eine Gehäusewand 23 angeformt ist.

Im vorliegenden Ausführungsbeispiel ist an zwei diametral gegenüberliegenden Positionen des Filterschutzelements 10 bzw. des Gehäuses 20 ein Vorsprung 15 bzw. eine Einführrampe 25 angeordnet. Damit wird einer Verkantung des Filterschutzelements vorgebeugt. Dies gilt insbesondere dann, wenn das Filterschutzelement wie im dargestellten Ausführungsbeispiel einen langlochartigen Querschnitt besitzt und die Spannmittel gegenüberliegend an den bogenförmigen Schmalseiten angeordnet sind.

Um das Filterschutzelement im Endbereich zwischen den beiden Positionen der Spannmittel auszusteifen, sind mehrere Rippen 16 vorgesehen.

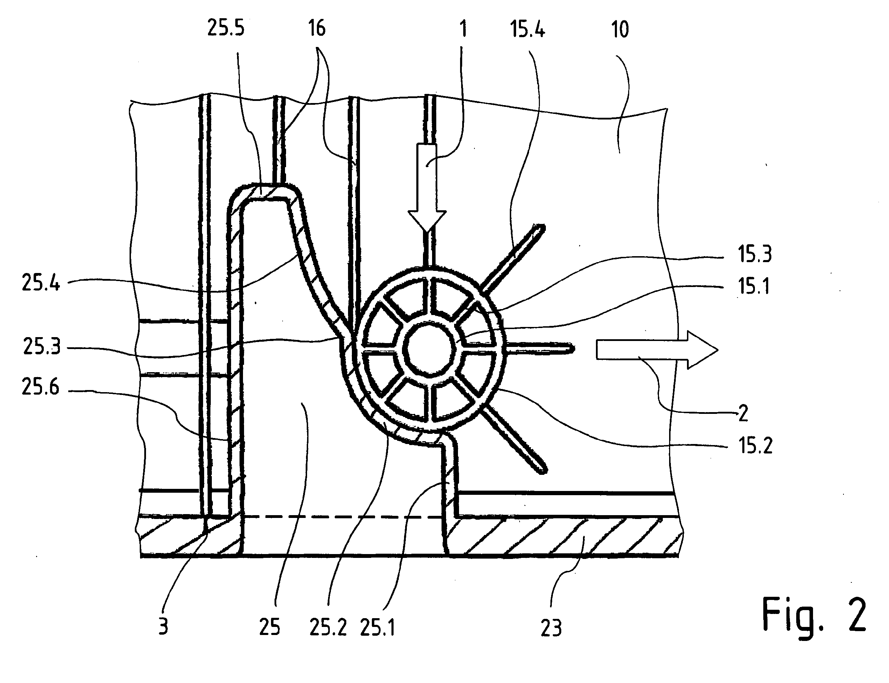

Eine bevorzugte Ausbildung des Vorsprungs 15 und der zugehörigen Einführrampe 25 ist in Figur 2 im Detail dargestellt. Figur 2 entspricht dabei einem Blick auf das Detail X in Fig. 1.

Die Einführrampe 25 ist am Gehäuseboden 23 ausgebildet. Um eine Fertigung des Gehäuses als Kunststoffspritzgießteil zu ermöglichen, müssen Materialanhäufungen vermieden werden, weshalb die Einführrampe 25 im vorliegenden Ausführungsbeispiel als Hohlkörper ausgebildet ist.

Ein Einführpunkt ist durch einen axialen Wandabschnitt 25.5 gebildet, der parallel zur Strömungsrichtung und damit zur gewünschten Vorschubrichtung des Filterschutzelements 10 innerhalb des Gehäuses 20 ausgerichtet ist. Er erstreckt sich vom Gehäuseboden 23 aus bis in das Innere des Gehäuses hinein.

Es schließt sich ein erster gebogener Bahnabschnitt 25.4 an. Dessen Verlauf ist so gewählt, dass er sich mehr in Richtung der Koordinate, die parallel zur Einschubrichtung 1 verläuft, erstreckt und weniger in Richtung des Vorschubs 2, das heißt, es muss in Einschubrichtung 1 ein großer Weg zurückgelegt werden, um eine relativ dazu kleine Vorwärtsbewegung in Richtung des Pfeils 2 zu erzielen.

In der in Fig. 2 dargestellten End- bzw. Einbaulage des Filterschutzelements liegt der Vorsprung 15 an einem weiteren gebogenen Bahnabschnitt 25.2 an. Am Übergang zwischen den Bahnabschnitten 25.4 und 25.2 ist ein Sattel 25.3 ausgeformt, der insbesondere noch einen leichten Hinterschnitt aufweist, so dass eine feste Verrastung des Filterschutzelements 10 im Gehäuse 20 bewirkt wird, wenn der Vorsprung 15 den Sattelpunkt 25.3 passiert hat und am Bogenabschnitt 25.2 anliegt.

Ein vertikaler Abschnitt 25.1 dient dazu, die als die eigentliche Kulissenführung wirkenden Abschnitte 25.2 bis 25.4 entsprechend vertikal im Gehäuse 20 zu positionieren.

Um ein Wegbiegen der Kulissenführung zu vermeiden, ist der in Fig. 2 links angeordnete Teil der Einführrampe 25 durch einen rückwärtigen Abschnitt 25.6 am Gehäuseboden abgestützt.

Der Vorsprung 15 besteht im dargestellten Ausführungsbeispiel aus zwei konzentrischen Kreisrippen 15.1, 15.2, die untereinander durch radiale Rippen 15.3 abgestützt sind. Die äußere Kreisrippe 15.2 ist durch radiale Schrägrippen 15.4 an der Oberfläche des Filterschutzelements 10 abgestützt. Obwohl für die Einführ- und Abgleitbewegung nur der in Fig. 2 links unten liegende Bereich der äußeren Kreisrippe 15.2 als Gleitfläche benötigt wird, ist die mehrfache Abstützung durch die geschlossenen Kreisrippen 15.1, 15.2 und die radialen Rippen 15.3, 15.4 vorteilhaft, um ein Abscheren des Vorsprungs 15 von der Oberfläche des Filterschutzelements 10 zu verhindern.

Die in Figur 2 ganz links dargestellte Versteifungsrippe 16 liegt in der Einbaulage am Punkt 3 direkt auf dem Gehäuseboden 23 auf. In gleicher Weise liegt die Rippe 16 oben an dem hier nicht dargestellten Deckelement an. Ist das Filterschutzelement 10 nicht vollständig bis ganz nach unten in die Einführungsrampe eingedrückt, lässt sich der Deckel nicht aufsetzen und das Gehäuse nicht verschließen. Drückt der Bediener dennoch mit großer Kraft auf den Deckel, um ihn zum Schließen zu Bringen, überträgt sich die Kraft über die Rippe 16 auf das Filterschutzelement 10 und bringt dieses in die vorgegebene Endlage. Dabei wird über die erfindungsgemäß ausgebildeten Spannmittel auch die Abdichtung zwangsweise bewirkt.

## Patentansprüche

1. Filtereinheit (100), die wenigstens ein Gehäuse (20) und wenigstens ein zwischen seinen Stirnflächen axial durchströmbares Filterelement umfasst, das über wenigstens einen Teil seiner Länge in ein rohrförmigen Filterschutzelement (10) eingesetzt und damit verbunden ist und das an seinem Außenumfang wenigstens einen endlosen Dichtkragen aufweist, welcher am Filterschutzelement (10) abgestützt ist und über Spannmittel gegen einen Dichtflansch am Gehäuse (20) anpressbar ist, **dadurch gekennzeichnet, dass** die Spannmittel durch wenigstens eine Einführrampe (25) am Gehäuse (20) und wenigstens einen auf der Einführrampe abgleitenden Vorsprung (15) am Filterschutzelement (10) gebildet sind, wobei sich die Einführrampe (25) von einem im Inneren des Gehäuses befindlichen Einführpunkt (25.5) in einer Richtung quer zur Strömungsrichtung auf das Gehäuse (23) zu und in axialer Richtung zum Dichtflansch am Gehäuse (23) hin erstreckt, derart, dass das Filterschutzelement mit dem darin befindlichen Filterelement beim Einsetzen in das Gehäuse durch eine Bewegung, die quer zur Strömungsrichtung verläuft, zugleich axial in Bezug auf die Mittelachse des Filterelements vorgeschoben und mit seinem Dichtring gegen einen entsprechenden Flansch am Gehäuse drückbar ist, wodurch die Abdichtung zwangsweise hergestellt wird.

2. Filtereinheit, die wenigstens ein Gehäuse und wenigstens ein zwischen seinen Stirnflächen axial durchströmbares Filterelement umfasst, das über wenigstens einen Teil seiner Länge in ein rohrförmigen Filterschutzelement eingesetzt und damit verbunden ist und das an seinem Außenumfang wenigstens einen endlosen Dichtkragen aufweist, welcher am Filterschutzelement abgestützt ist und über Spannmittel gegen einen Dichtflansch am Gehäuse anpressbar ist, **dadurch gekennzeichnet, dass** die Spannmittel durch wenigstens eine Einführrampe am Filterschutzelement und wenigstens einen auf der Einführrampe abgleitenden Vorsprung am Gehäuse gebildet sind, wobei sich die Einführrampe von einem im Inneren des Gehäuses befindlichen Einführpunkt in einer Richtung quer zur Strömungsrichtung auf das Gehäuse zu und in axialer Richtung vom Dichtflansch am Gehäuse weg erstreckt derart, dass das Filterschutzelement mit dem darin befindlichen Filterelement beim Einsetzen in das Gehäuse durch eine Bewegung, die quer zur Strömungsrichtung verläuft, zugleich axial in Bezug auf die Mittelachse des Filterelements vorgeschoben und mit seinem Dichtring gegen einen entsprechenden Flansch am Gehäuse drückbar ist, wodurch die Abdichtung zwangsweise hergestellt wird.

3. Filtereinheit (100) nach Anspruch 1 oder 2, **dadurch gekennzeichnet, dass** die Kulissenführung durch eine Einführrampe (25) und das Führungsmittel am Filterschutzelement (10) als Vorsprung (15) mit einer abgerundeten Gleitfläche ausgebildet ist.

4. Filtereinheit (100) nach Anspruch 1 oder 2, **dadurch gekennzeichnet, dass** am Außenumfang des Filterschutzelements (10) und/oder an den dem Filterschutzelement (10) gegenüberliegenden Bereichen des Deckelelements Abstandhalterelemente angeformt sind und das Deckelelement im Betriebszustand der Filtereinheit das Filterschutzelement (10) kontaktiert.

5. Filtereinheit (100) nach Anspruch 3 oder 4, **dadurch gekennzeichnet, dass** die Einführrampe (25) als schiefe Ebene ausgebildet ist.

6. Filtereinheit (100) nach einem der Ansprüche 1 bis 4, **dadurch gekennzeichnet, dass** die Einführrampe (25) in wenigstens zwei Bahnbereiche (25.2, 25.4) mit unterschiedlicher Steigung bzw. Krümmung unterteilt ist.

7. Filtereinheit (100) nach Anspruch 6, **dadurch gekennzeichnet, dass** der Bahnbereich (25.2) für die Einbaulage des Filterschutzelements (10) und ein in Einbaulage daran anliegender Teil einer Gleitfläche am Vorsprung (15) als Kreisbogenabschnitte mit gleichem Radius ausgebildet sind.

8. Filtereinheit (100) nach Anspruch 6 oder 7, **dadurch gekennzeichnet, dass** zwischen den beiden Bahnbereichen (25.2, 25.4) ein Sattel (25.3) ausgebildet ist.

9. Filtereinheit (100) nach Anspruch 8, **dadurch gekennzeichnet, dass** am Sattel (25.3) ein Hinterschnitt ausgebildet ist.

## Claims

1. Filter unit (100), comprising at least one housing (20) and at least one filter element designed for axial flow between its end faces, that is inserted with at least part of its length into a tubular filter protection element (10) and connected thereto, and that features at least one endless sealing collar at its outer periphery, which rests against the filter protection element (10) and can be pressed by clamping means against a sealing flange on the housing (20), **characterized in that** the clamping means are formed by at least one insertion ramp (25) on the housing (20) and by at least one protrusion (15) on the filter protection element (10) that is gliding along the insertion ramp, the insertion ramp (25) extending from an insertion point (25.5) located in the interior of the housing in a direction transverse to the flow direction towards the housing (23) and in an axial direction towards the sealing flange on the housing (23) in such a way that the filter protection element with the filter element therein is advanced during insertion into the housing at the same time axially in relation to the central axis of the filter element by means of a movement transverse to the flow direction and that it can be pressed with its seal ring against a corresponding flange on the housing so that the sealing is realized by force.

2. Filter unit, comprising at least one housing and at least one filter element designed for axial flow between its end faces, that is inserted with at least part of its length into a tubular filter protection element and connected thereto, and that features at least one endless sealing collar at its outer periphery, which rests against the filter protection element and can be pressed by clamping means against a sealing flange on the housing, **characterized in that** the clamping means are formed by at least one insertion ramp on the filter protection element and by at least one protrusion on the housing that is gliding along the insertion ramp, the insertion ramp extending from an insertion point located in the interior of the housing in a direction transverse to the flow direction towards the housing and in an axial direction away from the sealing flange on the housing in such a way that the filter protection element with the filter element therein is advanced during insertion into the housing at the same time axially in relation to the central axis of the filter element by means of a movement transverse to the flow direction and that it can be pressed with its seal ring against a corresponding flange on the housing so that the sealing is realized by force.

3. Filter unit (100) according to claim 1 or 2, **characterized in that** the sliding guide is formed by an insertion ramp (25) and that the guide means on the filter protection element (10) is designed as protrusion (15) with a rounded sliding surface.

4. Filter unit (100) according to claim 1 or 2, **characterized in that** on the outer periphery of the filter protection element (10) and/or on the areas of the cover element located opposite the filter protection element (10) spacer elements are integrally molded and that the cover element contacts the filter protection element (10) in the operating condition of the filter unit.

5. Filter unit (100) according to claim 3 or 4, **characterized in that** the insertion ramp (25) is designed as an inclined plane.

6. Filter unit (100) according to one of the claims 1 to 4, **characterized in that** the insertion ramp (25) is divided into at least two sections (25.2, 25.4) with different incline or curvature.

7. Filter unit (100) according to claim 6, **characterized in that** the section (25.2) for the installation position of the filter protection element (10) and a part of a sliding surface on the protrusion (15) resting in installation position against it are designed as circular arc sections having the same radius.

8. Filter unit (100) according to claim 6 or 7, **characterized in that** a hump (25.3) is formed between the two sections (25.2, 25.4).

9. Filter unit (100) according to claim 8, **characterized in that** an undercut is formed on the hump (25.3).

## Revendications

1. Unité filtrante (100) comprenant au moins un boîtier (20) et au moins un élément filtrant pouvant être parcouru en sens axial par un flux entre ses faces frontales, l'élément filtrant étant inséré sur au moins une partie de sa longueur dans un élément tubulaire de protection de filtre (10) et ainsi relié à cet élément, et étant par ailleurs doté sur sa circonférence extérieure d'un collet d'étanchéité continu, au moins au nombre d'un, qui s'appuie sur l'élément de protection de filtre (10) et pouvant être pressé, au moyen de moyens de serrage, contre une bride d'étanchéité du boîtier (20), **caractérisée en ce que** les moyens de serrage sont formés par au moins une rampe d'introduction (25) sur le boîtier (20) et au moins un épaulement (15) de l'élément de protection de filtre (10) glissant sur la rampe d'introduction, la rampe d'introduction (25) s'étendant, depuis un point d'entrée (25.5) situé à l'intérieur du boîtier, dans une direction en travers du sens du flux vers le boîtier (23) et en sens axial vers la bride d'étanchéité du boîtier (23), de sorte que l'élément de protection de filtre, avec l'élément filtrant placé à l'intérieur, soit poussé vers l'avant, lors de la mise en place dans le boîtier, par un mouvement évoluant en travers du sens du flux, et en même temps en sens axial par rapport à l'axe médian de l'élément filtrant, et puisse être pressé, avec sa bague d'étanchéité, contre une bride correspondante du boîtier, l'étanchéité étant ainsi forcément générée.

2. Unité filtrante comprenant au moins un boîtier et au moins un élément filtrant pouvant être parcouru en sens axial par un flux entre ses faces frontales, l'élément filtrant étant inséré sur au moins une partie de sa longueur dans un élément tubulaire de protection de filtre et ainsi relié à cet élément, et étant par ailleurs doté sur sa circonférence extérieure d'un collet d'étanchéité continu, au moins au nombre d'un, qui s'appuie sur l'élément de protection de filtre et pouvant être pressé, au moyen de moyens de serrage, contre une bride d'étanchéité du boîtier, **caractérisée en ce que** les moyens de serrage sont formés par au moins une rampe d'introduction sur l'élément de protection de filtre et au moins un épaulement du boîtier glissant sur la rampe d'introduction, la rampe d'introduction s'étendant, depuis un point d'entrée situé à l'intérieur du boîtier, dans une direction en travers du sens du flux vers le boîtier et en sens axial dans la direction opposée à la bride d'étanchéité du boîtier, de sorte que l'élément de protection de filtre, avec l'élément filtrant placé à l'intérieur, soit poussé vers l'avant, lors de la mise en place dans le boîtier, par un mouvement évoluant en travers du sens du flux, et en même temps en sens axial par rapport à l'axe médian de l'élément filtrant, et puisse être pressé, avec sa bague d'étanchéité, contre une bride correspondante du boîtier, l'étanchéité étant ainsi forcément générée.

3. Unité filtrante (100) selon la revendication 1 ou 2, **caractérisée en ce que** le guide-coulisse est formé par une rampe d'introduction (25) et que l'élément de guidage de l'élément de protection de filtre (10) est exécuté en tant qu'épaulement (15) avec une surface de glissement arrondie.

4. Unité filtrante (100) selon la revendication 1 ou 2, **caractérisée en ce que** des éléments entretoises sont moulés sur la circonférence extérieure de l'élément de protection de filtre (10) et/ou sur les zones de l'élément de couvercle opposées à l'élément de protection de filtre (10) et que, en état d'exploitation de l'unité filtrante, l'élément de couvercle touche l'élément de protection de filtre (10).

5. Unité filtrante (100) selon la revendication 3 ou 4, **caractérisée en ce que** la rampe d'introduction (25) est exécutée en tant que plan incliné.

6. Unité filtrante (100) selon l'une des revendications 1 à 4, **caractérisée en ce que** la rampe d'introduction (25) est divisée en au moins deux sections (25.2, 25.4) avec une pente et/ou une courbure différente.

7. Unité filtrante (100) selon la revendication 6, **caractérisée en ce que** la section (25.2) pour la position de montage de l'élément de protection de filtre (10) et une partie contiguë, en position de montage, d'une surface de glissement de l'épaulement (15) sont exécutées en tant que sections d'arc de cercle avec le même rayon.

8. Unité filtrante (100) selon la revendication 6 ou 7, **caractérisée en ce qu'**une chaise (25.3) est formée entre les deux sections (25.2, 25.4).

9. Unité filtrante (100) selon la revendication 8, **caractérisée en ce qu'**une contre-dépouille est réalisée sur la chaise (25.3).
